(19) Europäisches Patentamt
European Patent Office
Office européen des brevets

(11) EP 2 665 772 B1

# (12) EUROPEAN PATENT SPECIFICATION

(45) Date of publication and mention of the grant of the patent:
**05.11.2014 Bulletin 2014/45**

(21) Application number: **12700238.4**

(22) Date of filing: **17.01.2012**

(51) Int Cl.:
***C08L 23/10*** *(2006.01)*

(86) International application number:
**PCT/EP2012/050589**

(87) International publication number:
**WO 2012/098086 (26.07.2012 Gazette 2012/30)**

## (54) POLYOLEFIN COMPOSITION

POLYOLEFINZUSAMMENSETZUNG

COMPOSITION DE POLYOLÉFINE

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **18.01.2011 EP 11151238**
**19.01.2011 US 201161434332 P**

(43) Date of publication of application:
**27.11.2013 Bulletin 2013/48**

(73) Proprietor: **Basell Poliolefine Italia S.r.l.**
**20127 Milano (IT)**

(72) Inventors:
- **CIARAFONI, Marco**
**I-44123 Ferrara (IT)**
- **DESTRO, Mara**
**I-44138 Bologna (IT)**
- **MASSARI, Paola**
**I-44121 Ferrara (IT)**
- **PANTALEONI, Roberto**
**I-44122 Ferrara (IT)**

(74) Representative: **Sacco, Marco**
**Basell Poliolefine Italia S.r.l.**
**Intellectual Property**
**P.le Donegani, 12**
**44122 Ferrara (IT)**

(56) References cited:
**EP-A1- 1 849 826**
**EP-A1- 2 133 389**
**US-A- 4 113 806**
**US-A- 4 493 923**

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

EP 2 665 772 B1

## Description

The present invention relates to a polyolefin composition having a good balance of mechanical properties in particular being characterized by an high degree of workability. The polyolefin compositions according to the present invention find application in luggage, house ware, case for rechargeable lead batteries, and in automotive field, in particular as bumpers and interior trims.
As is known, the isotactic polypropylene, though being endowed with an exceptional combination of excellent properties, is affected by the drawback of possessing an insufficient impact resistance at relatively low temperatures.
According to the teaching of the prior art, it is possible to obviate the said drawback and maintain whitening resistance, without sensibly affecting the other polymer properties, by properly adding rubbers and polyethylene to the polypropylene.
US 4,493,923 relates to a five components compositions:. a) a propylene homopolymer; b) a propylene ethylene copolymer; c) high density ethylene homopolymer;: d) linear low density ethylene copolymer; e) rubber (ethylene propylene copolymer or ethylene propylene diene terpolymer). It si completely silent about the features of the propylene homopolymer and propylene ethylene copolymer. EP1849826 relates to an olefin composition comprising

a) 75 to 98 wt.-_% of a heterophasic propylene/_alpha-_olefin copolymer comprising a polymer or a copolymer of propylene and an alpha-_olefin as matrix polymer and a propylene/_alpha-_olefin rubber copolymer, the XCS-_fraction of the heterophasic copolymer being soluble in xylene at +23°C having an intrinsic viscosity of less than 2 dl/g,
b. 2 to 25 wt.-_% of an ethylene homopolymer having a melt flow rate ($MFR_2$) of more than 10 g/_10min and a density of less than 0.930 g/$cm^3$.

This document is completely silent about the MFR and polydisperisty index of component a), the split between component a) and b) the ethylene content of b), and the MFR of the total composition.
WO 2006/067023 relates to a polypropylene composition comprising (per cent by weight):

a) 50-77%, preferably 50 to less than 70%, of a crystalline propylene polymer having an amount of isotactic pentads (mmmm), measured by $^{13}C$-MNR on the fraction insoluble in xylene at 25°C, higher than 97.5 molar % and a polydispersity index ranging from 4 to 10, preferably from 5 to 10, more preferably from 5.5 to 10;
b) 13-28%, preferably higher than 15 to 28%, of an elastomeric copolymer of ethylene
and propylene, the copolymer having an amount of recurring units deriving from ethylene ranging from 30 to 70%, preferably 35 to 60%, and being partially soluble in xylene at room temperature, the polymer fraction soluble in xylene at room temperature having an intrinsic viscosity value ranging from 2 to 4 dl/g; and
c) 10-22%, preferably 10 to 20%, of polyethylene having an intrinsic viscosity value ranging from 1 to 3 dl/g and optionally containing recurring units deriving from propylene in amounts up to less than 10%.

The composition typically has a value of melt flow rate ranging from 10 to 30, preferably 10 to 20, g/10 min.
WO 2006/125720 relates to a propylene polymer composition comprising (per cent by weight):

a) 65-77%, preferably 70 to 77%, of a crystalline propylene polymer having an amount of isotactic pentads (mmmm), measured by on the fraction insoluble in xylene at 25° C, higher than 97.5 molar % and a polydispersity index ranging from 5 to 10;
b) 8 to less than 13%, preferably 9 to 12%, of an elastomeric copolymer of ethylene and propylene, the copolymer having an amount of recurring units deriving from ethylene ranging from 30 to 70%, preferably 35 to 60%, and being partially soluble in xylene at room temperature; the polymer fraction soluble in xylene at room temperature having an intrinsic viscosity value ranging from 2 to 4 dl/g; and
c) 10-23%, preferably 10 to 20%, of polyethylene having an intrinsic viscosity value ranging from 1.5 to 4 d/lg and optionally containing recurring units derived from propylene in amounts lower than 10%.

This composition typically has a value of melt flow rate ranging from 0.50 to 10 g/10 min, preferably 0.10 to 5 g/10 min, more preferably 1.3 to 4 g/10 min.
The applicant found that it is possible to fine tuning al the variables of these compositions in order to achieve a better stress whitening resistance and to improve the workability of composition.
The first object of the present invention is a polyolefin composition comprising:

a) from 66 wt% to 76 wt %, preferably 67 wt % to 74 wt %, of a propylene polymer having the fraction insoluble in xylene at 25° C, higher than 97 wt%, a polydispersity index lower than 4.5, preferably ranging from 3.5 to 4.5 and

a melt flow rate (MFR) determined according to ISO method 1133 (230° C and 2.16 kg) comprised between 6.0 g/10 min and 10.0 g/10 min, preferably between 6.5 g/10.0 min and 9.0 g/10 min;

b) from 12 wt% to 20 wt%, preferably from 13.5 wt% to 18.0 wt%, more preferably from 13.5 wt% to less than 15.0 wt% of a copolymer of ethylene and propylene, the copolymer having an amount of recurring units deriving from ethylene ranging from 40 wt% to 53 wt%, preferably 42 wt% to 50 wt%, the polymer fraction soluble in xylene at 25°C having an intrinsic viscosity value ranging from 2 to 4 dl/g; and

c) from 12 wt% to 20 wt%, preferably from 13 wt% to 16 wt% of ethylene homopolymer; the sum of the amount of a) +b) +c) being 100;

said composition having a value of melt flow rate (MFR) determined according to ISO method 1133 (230° C and 2.16 kg) ranging from 3.6 to 8.0 g/10 min, preferably from 4.1 to 7.0 g/10 min.

Preferably the weight ratio between polyethylene (c) and copolymer (b) is comprised between 0.7 and 1.2; preferably between 0.8 and 1.1.

The term "copolymer" as used herein refers to polymers with two different recurring units in the chain.

The composition of the present invention shows improved workability as shown by the spiral test values and at the same time maintains good values of stress whitening resistance.

This feature renders the polyolefin composition object of the present invention fit for the preparation of injected molded articles such as bumpers, luggage and cases for batteries in particular cases for lead batteries.

Typically, the composition of the present invention exhibits a flexural modulus value of at least 1200 MPa, preferably from 1300 to 1600 MPa.

Propylene polymer (a) is a propylene homopolymer or a propylene/ethylene copolymer having less than 5% by weight, preferably less than 3% by weight, more preferably less than 2% by weight of ethylene derived units content. Preferably Propylene polymer (a) is a propylene homopolymer

Copolymer (b) preferably exhibits a fraction insoluble in xylene at room temperature that is typically in amounts of less than 45 wt%, preferably up to 15 wt%. The xylene-insoluble polymer fraction of copolymer (b) is reach in ethylene; the amount of ethylene is typically higher than 55 wt%.

Ethylene homopolymer (c) can contain small amount (less than 5% by weight, preferably less than 1% by weight) of propylene derived units.

The composition of the present invention is obtained by means of a sequential copolymerization process. Said process comprising at least three sequential polymerization stages with each subsequent polymerization stage being conducted in the presence of the polymeric material formed in the immediately preceding polymerization reaction, wherein the polymerization stage of propylene to the crystalline polymer (a) is carried out in at least one stage, than a copolymerization stage of mixtures of ethylene with propylene to the elastomeric polymer (b) and finally a polymerization stage of ethylene to polyethylene (c) are carried out. The polymerisation stages may be carried out in the presence of a stereospecific Ziegler-Natta catalyst.

According to a preferred embodiment, all the polymerisation stages are carried out in the presence of a catalyst comprising a trialkylaluminium compound, an electron donor, and a solid catalyst component comprising a halide or halogen-alcoholate of Ti and an electron-donor compound supported on anhydrous magnesium chloride. Catalysts having the above-mentioned characteristics are well known in the patent literature; particularly advantageous are the catalysts described in USP 4,399,054 and EP-A-45 977. Other examples can be found in USP 4,472,524.

Preferably the polymerisation catalyst is a Ziegler-Natta catalyst comprising a solid catalyst component comprising:

a) Mg, Ti and halogen and an electron donor (internal donor),
b) an alkylaluminum compound and, optionally (but preferably),
c) one or more electron-donor compounds (external donor).

The internal donor is selected from the esters of mono or dicarboxylic organic acids such as phthalates. They are described in US patent 4522930, European patent 45977 and international patent applications WO 00/63261 and WO 01/57099, for example. Particularly suited are the phthalic acid esters. Alkylphthalates are preferred, such as diisobutyl, dioctyl and diphenyl phthalate and benzyl-butyl phthalate.

The Al-alkyl compounds used as co-catalysts comprise Al-trialkyls, such as Al-triethyl, Al-triisobutyl, Al-tri-n-butyl, and linear or cyclic Al-alkyl compounds containing two or more Al atoms bonded to each other by way of O or N atoms, or $SO_4$ or $SO_3$ groups. The Al-alkyl compound is generally used in such a quantity that the Al/Ti ratio be from 1 to 1000.

The external donors (c) are silicon compounds, ethers, esters such as phthalates, benzoates, succinates, amines, heterocyclic compounds and particularly 2,2,6,6-tetramethylpiperidine, ketones and the 1,3-diethers of the general formula (III):

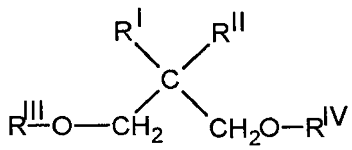

wherein $R^I$ and $R^{II}$ are the same or different and are $C_1$-$C_{18}$ alkyl, $C_3$-$C_{18}$ cycloalkyl or $C_7$-$C_{18}$ aryl radicals; $R^{III}$ and $R^{IV}$ are the same or different and are $C_1$-$C_4$ alkyl radicals; or the 1,3-diethers in which the carbon atom in position 2 belongs to a cyclic or polycyclic structure made up of 5, 6 or 7 carbon atoms and containing two or three unsaturations.

Ethers of this type are described in published European patent applications 361493 and 728769.

Preferred electron-donor compounds that can be used as external donors include aromatic silicon compounds containing at least one Si-OR bond, where R is a hydrocarbon radical. A particularly preferred class of external donor compounds is that of silicon compounds of formula $R_a{}^7R_b{}^8Si(OR^9)_c$, where a and b are integers from 0 to 2, c is an integer from 1 to 3 and the sum (a+b+c) is 4; $R^7$, $R^8$, and $R^9$, are $C_1$-$C_{18}$ hydrocarbon groups optionally containing heteroatoms. Particularly preferred are the silicon compounds in which a is 1, b is 1, c is 2, at least one of $R^7$ and $R^8$ is selected from branched alkyl, alkenyl, alkylene, cycloalkyl or aryl groups with 3-10 carbon atoms optionally containing heteroatoms and $R^9$ is a $C_1$-$C_{10}$ alkyl group, in particular methyl. Examples of such preferred silicon compounds are cyclohexyltrimethoxysilane, t-butyltrimethoxysilane, t-hexyltrimethoxysilane, cyclohexylmethyldimethoxysilane, 3,3,3-trifluoropropyl-2-ethylpiperidyl-dimethoxysilane, diphenyldimethoxysilane, methyl-t-butyldimethoxysilane, dicyclopentyldimethoxysilane, 2-ethylpiperidinyl-2-t-butyldimethoxysilane, (1,1,1-trifluoro-2-propyl)-methyldimethoxysilane and (1,1,1-trifluoro-2-propyl)-2-ethylpiperidinyldimethoxysilane. Moreover, are also preferred the silicon compounds in which a is 0, c is 3, $R^8$ is a branched alkyl or cycloalkyl group, optionally containing heteroatoms, and $R^9$ is methyl. Particularly preferred specific examples of silicon compounds are (tert-butyl)$_2$Si($OCH_3$)$_2$, (cyclohexyl)(methyl) Si($OCH_3$)$_2$, (phenyl)$_2$Si($OCH_3$)$_2$ and (cyclopentyl)$_2$Si($OCH_3$)$_2$.

Preferably the electron donor compound (c) is used in such an amount to give a molar ratio between the organoaluminum compound and said electron donor compound (c) of from 0.1 to 500, more preferably from 1 to 300 and in partcular from 3 to 100.

As explained above, the solid catalyst component comprises, in addition to the above electron donors, Ti, Mg and halogen. In particular, the catalyst component comprises a titanium compound, having at least a Ti-halogen bond and the above mentioned electron donor compounds supported on a Mg halide. The magnesium halide is preferably $MgCl_2$ in active form, which is widely known from the patent literature as a support for Ziegler-Natta catalysts. Patents USP 4,298,718 and USP 4,495,338 were the first to describe the use of these compounds in Ziegler-Natta catalysis. It is known from these patents that the magnesium dihalides in active form used as support or co-support in components of catalysts for the polymerisation of olefins are characterized by X-ray spectra in which the most intense diffraction line that appears in the spectrum of the non-active halide is diminished in intensity and is replaced by a halo whose maximum intensity is displaced towards lower angles relative to that of the more intense line.

The preferred titanium compounds are $TiCl_4$ and $TiCl_3$; furthermore, also Ti-haloalcoholates of formula Ti(OR)n-yXy can be used, where n is the valence of titanium, y is a number between 1 and n, X is halogen and R is a hydrocarbon radical having from 1 to 10 carbon atoms.

The preparation of the solid catalyst component can be carried out according to several methods, well known and described in the art.

According to a preferred method, the solid catalyst component can be prepared by reacting a titanium compound of formula Ti(OR)n-yXy, where n is the valence of titanium and y is a number between 1 and n, preferably $TiCl_4$, with a magnesium chloride deriving from an adduct of formula $MgCl_2$·pROH, where p is a number between 0.1 and 6, preferably from 2 to 3.5, and R is a hydrocarbon radical having 1-18 carbon atoms. The adduct can be suitably prepared in spherical form by mixing alcohol and magnesium chloride in the presence of an inert hydrocarbon immiscible with the adduct, operating under stirring conditions at the melting temperature of the adduct (100-130° C). Then, the emulsion is quickly quenched, thereby causing the solidification of the adduct in form of spherical particles.

Examples of spherical adducts prepared according to this procedure are described in USP 4,399,054 and USP 4,469,648. The so obtained adduct can be directly reacted with the Ti compound or it can be previously subjected to thermally controlled dealcoholation (80-130° C) so as to obtain an adduct in which the number of moles of alcohol is generally lower than 3, preferably between 0.1 and 2.5. The reaction with the Ti compound can be carried out by suspending the adduct (dealcoholated or as such) in cold $TiCl_4$ (generally 0° C); the mixture is heated up to 80-130° C and kept at this temperature for 0.5-2 hours. The treatment with $TiCl_4$ can be carried out one or more times. The electron donor compound(s) can be added during the treatment with $TiCl_4$.

Regardless of the preparation method used, the final amount of the electron donor compound(s) is preferably such that the molar ratio with respect to the $MgCl_2$ is from 0.01 to 1, more preferably from 0.05 to 0.5.

The said catalyst components and catalysts are described in WO 00/63261 and WO 01/57099.

The catalysts may be pre-contacted with small quantities of olefin (pre-polymerisation), maintaining the catalyst in suspension in a hydrocarbon solvent, and polymerising at temperatures from room to 60° C, thus producing a quantity of polymer from 0.5 to 3 times the weight of the catalyst. The operation can also take place in liquid monomer, producing, in this case, a quantity of polymer 1000 times the weight of the catalyst.

By using the above mentioned catalysts, the polyolefin compositions are obtained in spheroidal particle form, the particles having an average diameter from 250 to 7,000 microns, a flowability of less than 30 seconds and a bulk density (compacted) greater than 0.4 g/ml.

The polymerisation stages may occur in liquid phase, in gas phase or liquid-gas phase. Preferably, the polymerisation of crystalline polymer (a) is carried out in liquid monomer (e.g. using liquid propylene as diluent), while the copolymerisation stages of elastomeric copolymer (b) and polyethylene (c) are carried out in gas phase. Alternatively, all the three sequential polymerisation stages can be carried out in gas phase.

The reaction temperature in the polymerisation stage for the preparation of crystalline polymer (a) and in the preparation of the elastomeric copolymer (b) and polyethylene (c) in be the same or different, and is preferably from 40 to 100° C; more preferably, the reaction temperature ranges from 50 to 80° C in the preparation of polymer (a), and from 70 to 100° C for the preparation of polymer components (b) and (c).

The pressure of the polymerisation stage to prepare polymer (a), if carried out in liquid monomer, is the one which competes with the vapour pressure of the liquid propylene at the operating temperature used, and it may be modified by the vapour pressure of the small quantity of inert diluent used to feed the catalyst mixture, by the overpressure of optional monomers and by the hydrogen used as molecular weight regulator. The polymerisation pressure preferably ranges from 33 to 43 bar, if done in liquid phase, and from 5 to 30 bar if done in gas phase. The residence times relative to the two stages depend on the desired ratio between polymers (a) and (b) and (c), and can usually range from 15 minutes to 8 hours. Conventional molecular weight regulators known in the art, such as chain transfer agents (e.g. hydrogen or $ZnEt_2$), may be used.

Conventional additives, fillers and pigments, commonly used in olefin polymers, may be added, such as nucleating agents, extension oils, mineral fillers, and other organic and inorganic pigments. In particular, the addition of inorganic fillers, such as talc, calcium carbonate and mineral fillers, also brings about an improvement of some mechanical properties, such as flexural modulus and HDT. Talc can also have a nucleating effect.

The nucleating agents are preferably added to the compositions of the present invention in quantities ranging from 0.05 to 2% by weight, more preferably from 0.1 to 1% by weight with respect to the total weight.

The polypropylene object of the present invention is especially designed for case batteries, preferably for case for lead batteries. Thus e further object of the present invention is a case for lead batteries comprising the polypropylene composition of the present invention. Preferably the case object of the present invention has a parallelepiped shape comprising a bottom part and four side parts the internal space being divided in a plurality of cells by one or more spacers.

Fig 1 shows a side cross section an embodiment of the polypropylene case according to the present invention. The case 1 contains a plurality of individual cells 2 created by the spacer 3

The following examples, intend to illustrate, without limiting, the present invention.

Examples

The following analytical methods have been used to determine the properties reported in the detailed description and in the examples.

- <u>Ethylene:</u>

**Ethylene (C2) content**

Ethylene content has been determined by IR spectroscopy.

The spectrum of a pressed film of the polymer is recorded in absorbance vs. wavenumbers ($cm^{-1}$). The following measurements are used to calculate C2 content:

a) **Area (At)** of the combination absorption bands between 4482 and 3950 $cm^{-1}$ which is used for spectrometric normalization of film thickness.

b) **Area ($A_{C2}$)** of the absorption band due to methylenic sequences ($CH_2$ rocking vibration) after a proper digital subtraction of an isotactic polypropylene (IPP) reference spectrum. The range 660 to 790 $cm^{-1}$ is used for both heterophasic and/or random copolymers.

- <u>Fractions soluble and insoluble in xylene at 25 °C:</u> 2.5 g of polymer are dissolved in 250 mL of xylene at 135° C under agitation. After 20 minutes the solution is allowed to cool to 25° C, still under agitation, and then allowed

to settle for 30 minutes. The precipitate is filtered with filter paper, the solution evaporated in nitrogen flow, and the residue dried under vacuum at 80° C until constant weight is reached. Thus one calculates the percent by weight of polymer soluble and insoluble at room temperature (25° C).

- Intrinsic Viscosity [η]: Measured in tetrahydronaphthalene at 135° C.
- Polydispersity index: Measurement of molecular weight distribution of the polymer. To determine the PI value, the modulus separation at loss modulus value, e.g. 500 Pa, is determined at a temperature of 200° C by using a RMS-800 parallel plates rheometer model marketed by Rheometrics (USA), operating at an oscillation frequency which increases from 0.01 rad/second to 100 rad/second. From the modulus separation value, the PI can be derived using the following equation:

$$\mathrm{PI} = 54.6 \times (\text{modulus separation})^{-1.76}$$

wherein the modulus separation (MS) is defined as:

$$\mathrm{MS} = (\text{frequency at } G' = 500\ \mathrm{Pa})/(\text{frequency at } G'' = 500\ \mathrm{Pa})$$

wherein G' is the storage modulus and G" is the loss modulus.

- Melt flow rate: Determined according to ISO method 1133 (230° C and 2.16 kg).
- Flexural modulus: Determined according to ISO method 178.
- Stress-whitening resistance: The resistance to whitening is determined by subjecting small disc, which have a 4 cm diameter and prepared by injection moulding, prepared from the polymer being tested to the impact of a ram having a 76 g weight. Both the minimum height (h) up to the maximum height allowed by the apparatus necessary to obtain whitening, and the width (diameter) of the whitened area are recorded.

Spiral flow Measurement Test - The spiral flow evaluation comprises injecting molten polymer into the center of a hollow spiral mold, and measuring the total length of solidified resin to determine how far the material will flow before it solidifies under specified conditions of pressure and temperature:

| **Injection machine** | **SANDRETTO Series 7 190** |
|---|---|
| Clamping force | 190 ton |
| Screw diameter | 50 mm |
| Maximum volume of the injected | 450 cc |
| Thickness of the spiral | 2.5 mm |
| Width of the spiral | 12.7 mm |
| Melting temperature | 212°C |
| Nozzle temperature | 197°C |
| Mold temperature | 40°C |
| Total cycle time | 31 seconds |
| Cooling time | 20 seconds |
| Holding time | 5 seconds |
| Mould moving | 6 seconds |

The spiral flow measurements are taken at four different pressures 20 bar, 40 bar, 60 bar, 80 bar and 100 bar:

Example 1

Catalyst system

A Ziegler-Natta catalyst was used as the polymerization catalyst comprising:

- a titanium solid catalyst component prepared with the procedure described in EP 728 769, Example 5, lines 46 to 53, according to which di-isobutyl phthalate is used as an internal donor compound;
- triethylaluminium (TEAL) as a cocatalyst;
- dicyclopentyldimethoxysilane as an external donor.

Catalyst system and pre-polymerization treatment

The solid catalyst component described above was contacted at 12° C for 24 minutes with aluminium triethyl (TEAL) and dicyclopentyldimethoxysilane (DCPMS) as external-electron-donor component. The weight ratio between TEAL and the solid catalyst component and the weight ratio between TEAL and DCPMS are specified in Table 1.

The catalyst system is then subjected to pre-polymerization by maintaining it in suspension in liquid propylene at 20° C for about 5 minutes before introducing it into the first polymerization reactor.

Polymerization

The polymerisation run is conducted in continuous in a series of three reactors equipped with devices to transfer the product from one reactor to the one immediately next to it. The first reactor is a liquid phase reactor, and the second and third reactors are fluid bed gas phase reactors. Polymer (a) is prepared in the first reactor, while polymers (b) and (c) are prepared in the second and third reactor, respectively. Temperature and pressure are maintained constant throughout the course of the reaction. Hydrogen is used as molecular weight regulator. The gas phase (propylene, ethylene and hydrogen) is continuously analysed via gas-chromatography. At the end of the run the powder is discharged and dried under a nitrogen flow. Then the polymer particles are introduced in an extrusion, wherein they are mixed with 8500 ppm of talc, 1500 ppm of Irganox B 215 (made of 1 part of Irganox 1010 and 2 parts of Irgafos 168) and 500 ppm of Ca stearate, to obtain a nucleated composition. The previously said Irganox 1010 is pentaerytrityl tetrakis 3-(3,5-di-tert-butyl-4-hydroxyphenyl) propanoate, while Irgafos 168 is tris (2,4-di-tert-butylphenyl) phosphite, btoh marketed by Ciba-Geigy. The polymer particles are extruded under nitrogen atmosphere in a twin screw extruder, at a rotation speed of 250 rpm and a melt temperature of 200-250°C.

Table 1 reports the polymerization conditions. Table 2 reports the analysis of the obtained composition.

Table 1 - Polymerization Process

| **Example** | | 1 |
|---|---|---|
| | | |
| TEAL/solid catalyst component weight ratio | | 7 |
| TEAL/DCPMS weight ratio | | 4 |
| **Liquid phase reactor** | | |
| Polymerisation temperature | °C | 70 |
| Pressure | Barg | 39 |
| Residence time | minutes | 106 |
| H2 conc | molppl | 3900 |
| **1st gas phase reactor** | | |
| Polymerisation temperature | °C | 80 |
| Pressure | Barg | 14 |
| Residence time | min | 9 |
| C2- / (C2- + C3-) | Mol ratio | 0.33 |
| H2/C2 | Mol ratio | 0.033 |

(continued)

| 2nd gas phase reactor | | |
|---|---|---|
| Polymerisation temperature | °C | 95 |
| Pressure | Barg | 12 |
| Residence time | Min | 8 |
| C2- / (C2- + C3-) | Mol ratio | 0.98 |
| H2/C2 | Mol ratio | 0.2 |
| H2 conc = hydrogen concentration in the propylene stream to reactor; C2- = ethylene ; C3- = Propylene | | |

Comparative example 2

Example 1 of WO2006/125720 has been repeated. The results of the analysis of the composition are reported on table 2.

Table 2

| | | | Ex1 | Comp ex 2 |
|---|---|---|---|---|
| Component a) | | | | |
| Propylene homopolymer | | %wt | 71.5 | |
| Polydispersity | | | <4.5 | 5.9 |
| MFR | | g/10' | 8 | 5 |
| X.S. | | %wt | 2.0 | 1.6 |
| Component b) | | | | |
| Propylene/ethylene copolymer | | %wt | 14 | 10.5 |
| % ethylene derived units (by calc.) | | %wt | 45 | 45 |
| Intrinsic viscosity of the xylene soluble fraction (1) (XS-IV) | | dl/g | 3.2 | 3.7 |
| Component c) | | | | |
| ethylene homopolymer | | | | |
| Split by calc. | | %wt | 14.5 | 18 |
| Final composition | | n. | | |
| MFR | | g/10' | 4.2 | 1.6 |
| Flexural Modulus | | MPa | 1432 | 1420 |
| D/B TT | | °c | -46 | - |
| Tens. Str.@ yield | | MPa | 28.9 | - |
| Elong.@ yield | | % | 8.9 | - |
| Tens. Str.@ break | | MPa | 17.9 | - |
| Elong.@ break | | % | 484 | - |

(continued)

| | | | Ex1 | Comp ex 2 |
|---|---|---|---|---|
| | 76 cm height | mmx10 | 140 | 140 |
| | 30 cm height | mmx10 | 120 | 130 |
| | 20 cm height | mmx10 | 100 | 110 |
| | 10 cm height | mmx10 | 70 | 100 |
| Whithening resistance diamete (mm) of the whitening area due to a ram (76 g) falling from a heigh of ... | 5 cm height | mmx10 | 50 | 70 |

(1) value measured on the polymer composition produced in the first and second reactor The compositions of example 1 and comparative example 2 have been subjected to the spiral test in order to measure the flowability of the compositions the results have been reported on table 3

Table 3

| | | Ex 1 | Comp ex 2 |
|---|---|---|---|
| Spiral length at 20 bar | mm | 250 | 190 |
| length at 40 bar | mm | 460 | 380 |
| Spiral length at 60 bar | mm | 620 | 530 |
| Spiral length at 80 bar | mm | 765 | 690 |
| Spiral length at 100 bar | mm | 955 | 830 |

From table 2 and table 3 clearly results that the polyolefin composition according to the invention shows improved whitening resistance and an improved flowability.

## Claims

1. A polyolefin composition comprising:

   a) from 66 wt% to 76 wt% of a propylene polymer having the fraction insoluble in xylene at 25° C, higher than 97 wt%, a polydispersity index lower than 4.5, and a melt flow rate (MFR) determined according to ISO method 1133 (230° C and 2.16 kg) comprised between 6.0 g/10 min and 10.0 g/10 min,
   b) from 12 wt% to 20 wt% of a copolymer of ethylene and propylene, the copolymer having an amount of recurring units deriving from ethylene ranging from 40 wt% to 53 wt%, the polymer fraction soluble in xylene at 25°C having an intrinsic viscosity value ranging from 2 to 4 dl/g;
   c) from 12% to 20% of ethylene homopolymer;
   the sum of the amount of a) +b) +c) being 100;
   said composition having a value of melt flow rate (MFR) determined according to ISO method 1133 (230° C and 2.16 kg) ranging from 3.6 to 8.0 g/10 min.

2. The polyolefin composition according to claim 1, having the melt flow rate (MFR) determined according to ISO method 1133 (230° C and 2.16 kg) from 4.1 to 7.0 g/10 min.

3. The polyolefin composition according to claims 1 or 2 wherein the polydispersity index of component a) ranges from 3.5 to 4.5.

4. The polyolefin composition according to any on of claims 1-3 wherein component a) ranges from 67 wt % to 74 wt %.

5. The polyolefin composition according to any on of claims 1-4 wherein component b) ranges from 13.5 wt% to 18 wt%.

6. The polyolefin composition according to any on of claims 1-5 wherein component c) ranges from 13 wt% to 16 wt%.

7. An injected molded article comprising the polyolefin composition of claims 1-6.

8. The injected molded article according to claim 7 being a battery case

9. The battery case according to claim 8 being a battery case for lead batteries.

10. The battery case according to claim 9 having a parallelepiped shape comprising a bottom part and four side parts the internal space being divided in a plurality of cells by one or more spacers.

11. The battery case according to claim 10 wherein the case (1) contains 6 individual cells (2) created by the spacers (3).

12. A vehicle comprising the battery case according to claims 8-11

**Patentansprüche**

1. Polyolefinzusammensetzung, umfassend:

   a) von 66 bis 76 Gew.-% eines Propylenpolymers mit der in Xylen bei 25 °C unlöslichen Fraktion, höher als 97 Gew.-%, einen Polydispersitätsindex kleiner als 4,5 und eine Schmelzflussrate (MFR), bestimmt nach dem ISO-Verfahren 1133 (bei 230 °C und 2,16 kg), die zwischen 6,0 g/10 min und 10,0 g/10 min beträgt,
   b) von 12 bis 20 Gew.-% eines Ethylen- und Propylen-Copolymers, wobei das Copolymer eine Menge von Wiederholungseinheiten aufweist, die sich von Ethylen im Bereich von 40 bis 53 Gew.-% ableiten und die in Xylen bei 25 °C lösliche Polymerfraktion einen intrinsischen Viskositätswert im Bereich von 2 bis 4 dl/g aufweist;
   c) von 12 bis 20 % Ethylen-Homopolymer;
   wobei die Summe der Menge von a) +b) +c) 100 beträgt;
   wobei die Zusammensetzung einen Schmelzflussratenwert (MFR-Wert) aufweist, der nach dem ISO-Verfahren 1133 (bei 230 °C und 2.16 kg) bestimmt im Bereich von 3,6 bis 8,0 g/10 min liegt.

2. Polyolefinzusammensetzung nach Anspruch 1, wobei die Schmelzflussrate (MFR), bestimmt nach dem ISO-Verfahren 1133 (bei 230 °C und 2,16 kg) von 4,1 bis 7,0 g/10 min beträgt.

3. Polyolefinzusammensetzung nach den Ansprüchen 1 oder 2, wobei der Polydispersitätsindex der Komponente a) im Bereich von 3,5 bis 4,5 liegt.

4. Polyolefinzusammensetzung nach einem der Ansprüche 1 bis 3, wobei Komponente a) im Bereich von 67 bis 74 Gew.-% liegt.

5. Polyolefinzusammensetzung nach einem der Ansprüche 1 bis 4, wobei Komponente b) im Bereich von 13,5 bis 18 Gew.-% liegt.

6. Polyolefinzusammensetzung nach einem der Ansprüche 1 bis 5, wobei Komponente c) im Bereich von 13 bis 16 Gew.-% liegt.

7. Spritzgießteil, umfassend die Polyolefinzusammensetzung nach den Ansprüchen 1 bis 6.

8. Spritzgießteil nach Anspruch 7, das ein Batteriegehäuse ist.

9. Batteriegehäuse nach Anspruch 8, das ein Batteriegehäuse für Bleibatterien ist.

10. Batteriegehäuse nach Anspruch 9 in der Form eines Parellelepipeds, umfassend einen Bodenteil und vier Seitenteile, wobei der innere Raum durch einen oder mehr Abstandshalter in eine Vielzahl von Zellen aufgeteilt ist.

11. Batteriegehäuse nach Anspruch 10, wobei das Gehäuse (1) 6 durch Abstandshalter (3) geschaffene individuelle

Zellen (2) enthält.

12. Fahrzeug, umfassend das Batteriegehäuse nach den Ansprüchen 8 bis 11.

**Revendications**

1. Composition polyoléfinique comprenant :

   a) 66% en poids à 76% en poids d'un polymère de propylène présentant une fraction insoluble dans le xylène à 25°C supérieure à 97% en poids, un indice de polydispersité inférieur à 4,5 et un indice de fluidité à chaud (MFR - Melt Flow Rate) déterminé selon la norme ISO procédé 1133 (230°C et 2,16 kg) compris entre 6,0 g/10 min et 10,0 g/10 min,
   b) 12% en poids à 20% en poids d'un copolymère d'éthylène et de propylène, le copolymère présentant une quantité d'unités récurrentes dérivées d'éthylène dans la plage de 40% en poids à 53% en poids, la fraction polymère soluble dans le xylène à 25°C présentant une valeur de viscosité intrinsèque dans la plage de 1,5 à 4 dl/g ;
   c) 12% à 20% d'homopolymère d'éthylène ;
   la somme de la quantité de a) +b) +c) valant 100 ;
   ladite composition présentant une valeur d'indice de fluidité à chaud (MFR), déterminé selon la norme ISO procédé 1133 (230°C et 2,16 kg), dans la plage de 3,6 à 8,0 g/10 min.

2. Composition polyoléfinique selon la revendication 1, présentant un indice de fluidité à chaud (MFR) déterminé selon la norme ISO procédé 1133 (230°C et 2,16 kg) de 4,1 à 7,0 g/10 min.

3. Composition polyoléfinique selon les revendications 1 ou 2, dans laquelle l'indice de polydispersité du constituant a) se situe dans la plage de 3,5 à 4,5.

4. Composition polyoléfinique selon l'une quelconque des revendications 1-3, dans laquelle le constituant a) se situe dans la plage de 67% en poids à 74% en poids.

5. Composition polyoléfinique selon l'une quelconque des revendications 1-4, dans laquelle le constituant b) se situe dans la plage de 13,5% en poids à 18% en poids.

6. Composition polyoléfinique selon l'une quelconque des revendications 1-5, dans laquelle le constituant c) se situe dans la plage de 13% en poids à 16% en poids.

7. Objet moulé par injection comprenant la composition polyoléfinique selon les revendications 1-6.

8. Objet moulé par injection selon la revendication 7, résidant en un boîtier de batterie.

9. Boîtier de batterie selon la revendication 8, résidant en un boîtier de batterie pour batteries au plomb.

10. Boîtier de batterie selon la revendication 9, présentant une forme de parallélépipède comprenant une partie de fond et quatre parties latérales, l'espace interne étant divisé en une pluralité de cellules par un ou plusieurs séparateurs.

11. Boîtier de batterie selon la revendication 10, dans lequel le boîtier (1) contient 6 cellules individuelles (2) créées par les séparateurs (3).

12. Véhicule comprenant le boîtier de batterie selon les revendications 8-11.

FIG 1

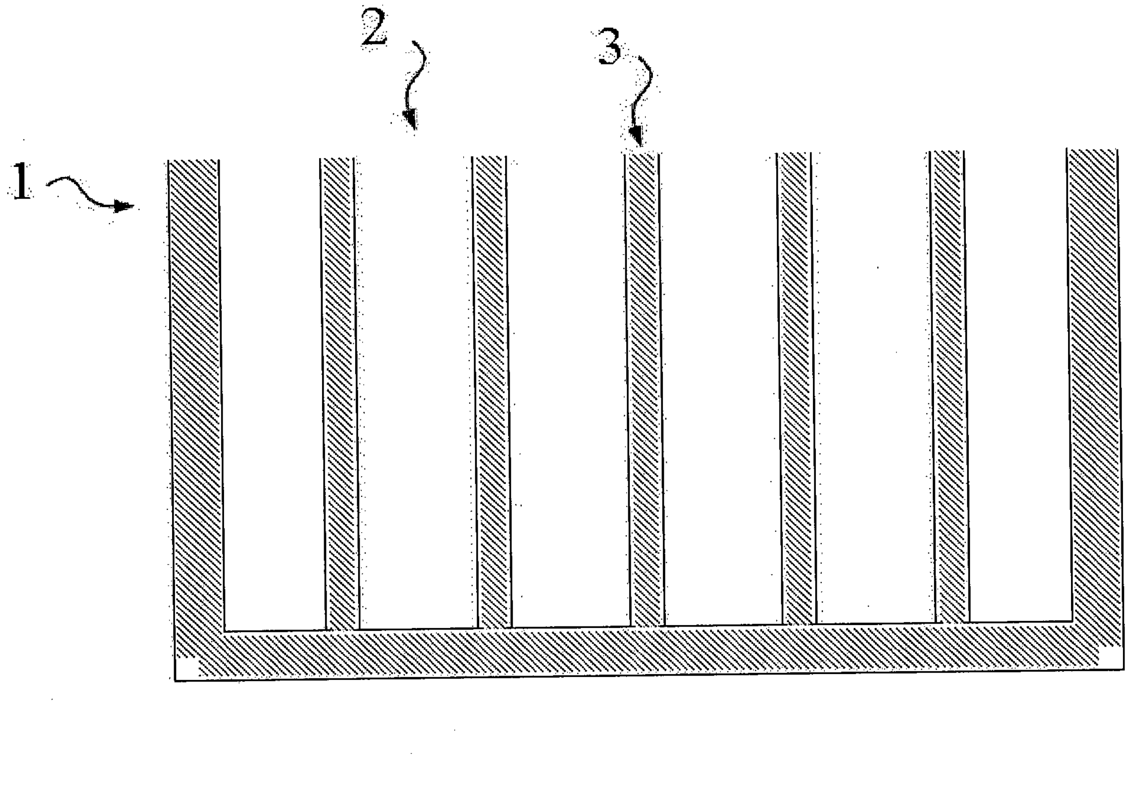

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- US 4493923 A
- EP 1849826 A
- WO 2006067023 A
- WO 2006125720 A
- US P4399054 A
- EP 45977 A
- US P4472524 A
- US 4522930 A
- WO 0063261 A
- WO 0157099 A
- EP 361493 A
- EP 728769 A
- US P4298718 A
- US P4495338 A
- US P4469648 A